# EUROPEAN PATENT SPECIFICATION

(11) **EP 2 877 329 B1**
(45) Date of publication and mention of the grant of the patent: **14.12.2016**
(21) Application number: 13744776.9
(22) Date of filing: 15.07.2013
(51) Int. Cl.: B29B 17/02

(54) **METHOD FOR SEPARATING RUBBER COMPONENTS AND METAL COMPONENTS OF TREAD PORTIONS OF VEHICLE TYRES**
VERFAHREN ZUM TRENNEN VON GUMMITEILEN UND METALLTEILEN AUS PROFILABSCHNITTEN VON FAHRZEUGREIFEN
PROCÉDÉ DE SÉPARATION DE COMPOSANTS CAOUTCHOUTEUX ET DE COMPOSANTS MÉTALLIQUES DE PARTIES BANDES DE ROULEMENT DE PNEUMATIQUES DE VÉHICULE

(30) Priority: 16.07.2012 GB 201212633
(43) Date of publication of application: 03.06.2015
(73) Proprietor: Symphony Recycling Technologies Ltd., Borehamwood, Hertfordshire WD6 1JD (GB)
(72) Inventor: JONES, Kenneth William, Borehamwood Hertfordshire WD6 1JD (GB)
(74) Representative: Rowlands, Stuart Michael
(86) International application number: PCT/GB2013/051880
(87) International publication number: WO 2014/013233

(56) References cited:
- EP-A1- 2 113 356
- WO-A1-92/22409
- WO-A1-03/064191
- WO-A2-2010/007455
- DE-A1- 3 933 729
- US-A1- 2010 230 521

## Description

### Field of the Invention

The present invention relates to a method for the separation of the rubber components and metal components of tread portions of road vehicle tyres.

### Background

Road vehicle tyres contain large amounts of rubber material. Metal components, that give rigidity to the tyre, are typically embedded within the rubber material. In particular, tyres may have a metal wire mesh embedded within the tread portions. The tyres also include a fibrous material embedded within the rubber material.

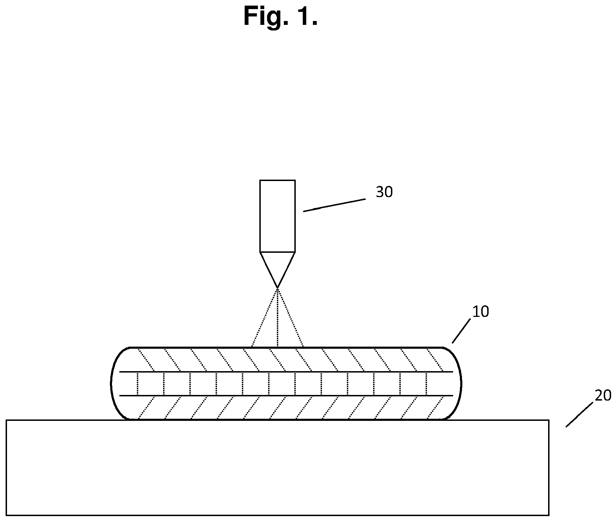

A large number of used vehicle tyres are removed each year, and it is desirable to recycle as many as possible. The recycling of tyres involves the separation of the rubber components and fibrous material from the metal components. This is conventionally achieved using a variety of batch processes, typically shredding and grinding. Figure 1 shows a known ultra high-pressure water arrangement for large tyres (e.g. aircraft or large earth mover tyres). A tyre 10 is placed on a horizontal surface 20, and is subjected to an ultra high-pressure water jet from a head 30. The water jet breaks down the rubber components and fibrous material into pieces, which are readily separated from the metal components. The rubber components, fibrous material, and metal components can then be separately processed.

Generally, in the manufacture of tyres, different grades of rubber are used for different parts of the tyre. For example, the highest quality rubber is typically used in the tread portion, as it is required to grip the road surface.

So as to maintain a distinction between the different rubber grades, it is desirable to separate them. The arrangement of figure 1 does not allow for such separation. However, it is possible to separate the treads from the sidewalls of the tyre.

It is desirable to provide a recycling method and apparatus that is able to efficiently and effectively recycle a large number of tyres.

US2010/230521 relates to a Micro-erosion Recovery System for separating recyclable tire materials (rubber, steel and fiber) and complying with quality standards governing the use of recovered tire materials.

WO2010/007455 relates to equipment for controllable fine milling of tires and other elastic materials by ultrahigh pressure liquid jet process. Milling is performed by a group of high-speed linear- vibrating liquid jets that are perpendicular to the forward motion of the workpiece such that jets are perpendicular to the surface of the workpiece or slightly inclined to that perpendicular, and the speed of vibration considerably exceeds the speed of forward motion of the workpiece. The linear vibrating motion is performed by twindriven milling heads.

EP2113356 relates to a process for closing orifices and/or protecting structures by reusing end-of-life tyres. The tyre treads are cut, separated from the flanks and flatly disposed, for the ultimate purpose of disposing these on the orifice or surface to be protected. The treads are mechanically joined by means of mechanical elements.

### Summary of the Invention

The present invention has been made with the aim of improving existing arrangements.

According to a first aspect of the present invention, a method is provided for separating rubber components and metal components of tread portions of vehicle tyres, each tread portion comprising a tread side and a back side, the method comprising the steps: forming a chain of tread portions by connecting a plurality of tread portions in a longitudinal direction, said tread portions being connected such that the tread side of each tread portion faces in the same direction, such that the chain of tread portions comprises a tread side and a back side; causing the tread side of at least a part of the chain of tread portions to contact a curved surface; and directing at least one high-pressure jet against the back side of the part of the chain of tread portions contacting the curved surface, to cause separation of the rubber components from the metal components.

In a preferred arrangement the at least one high-pressure jet is at least one ultra high-pressure water jet.

Since the tread side of the chain of tread portions is in contact with the curved surface, the chain of tread portions is held firmly while the ultra high-pressure water jet is directed at the back side. This means the rubber components are broken-up into rubber crumb and separated from the metal components in an efficient and controllable manner. Furthermore, as the tread portions contact the curved surface tread side down, the tread portions are inverted against their natural curvature around the curved surface. The inverting of the tread portions against their natural curvature ensures that substantially the entire surface of the tread side of the tread portion is fully in contact with the curved surface. When the entire surface area of the tread side is in contact with the curved surface, little energy is lost from the ultra high-pressure water jets, and the break-up and separation of the rubber components is carried out efficiently.

Preferably, the curved surface is a curved surface of a drive wheel, and the method further includes the step of rotating the drive wheel so as to pull the chain of tread portions around the curved surface towards the at least one high-pressure jet. The weight of the later tread portions in the chain urge earlier sections against the curved surface of the drive wheel. This action ensures that as large a section of the chain as possible is pressed against the curved surface. As each of the tread portions is pulled around the part of the curved surface, the remaining tread portions in the chain are drawn towards the drive wheel, so that tread portions are continuously drawn around the curved surface towards the high-pressure jet.

Preferably, the curved surface has a high coefficient of friction similar to that of a road surface. This arrangement takes advantage of the inherent high-friction capabilities of the treads, and ensures that the tread side of the tread portions securely grips, by friction, the curved surface. Thus, it can be ensured that the chain is pulled towards the water jet by the rotation of the drive wheel.

Preferably, an urging means is used for urging the back side of the chain of tread portions towards the curved surface. The urging means may include one or more rollers that contact the back side of the chain of tread portions. The urging means ensure that the tread side of the tread portions is held in contact with the curved surface.

The at least one high-pressure jet is preferably directed in a substantially horizontal direction against the back side of the chain of tread portions. This helps ensure the rubber crumb falls in a direction away from the drive wheel, and so avoids the rubber crumb interfering with the operation of the drive wheel.

Preferably, the metal components of the chain of tread portions are transported away from the curved surface after the rubber components have been separated. The metal components remain joined together after the rubber component has been removed. Therefore, the metal components can be continuously captured and moved away from the drive wheel.

It is preferable for the chain of tread portions to be formed such that there is a degree of freedom of movement in the lateral and vertical directions between adjacent tread portions in the chain. This may be achieved by using a single connection to connect respective tread portions. Such a single connection may be a single clip or single staple. Using a single connection allows for certain movement of the tread portions as they are processed. This is particularly effective when the severed ends of the tread portions are not cut square.

Preferably, the tread portions are tread portions of car tyres or light commercial vehicle tyres.

According to another aspect there is provided a method of connecting a plurality of tread portions of vehicle tyres together for use in a method of separating rubber components and metal components, each tread portion comprising a tread side and a back side, the method comprising the steps: forming a chain of tread portions by connecting a plurality of tread portions in a longitudinal direction, said tread portions being connected such that the tread side of each tread portion faces in the same direction, such that the chain of tread portions comprises a tread side and a back side, and wherein the chain of tread portions is formed such that there is a degree of freedom of movement between adjacent tread portions in the chain.

According to another aspect there is provided a separation and processing apparatus for separating rubber components and metal components of tread portions of road vehicle tyres, wherein each tread portion comprises a tread side and a back side, and a chain of tread portions is formed by connecting a plurality of tread portions in a longitudinal direction, said tread portions being connected such that the tread side of each tread portion faces in the same direction, such that the chain of tread portions comprises a tread side and a back side, the apparatus comprising: a curved surface adapted to contact the tread side of at least a part of the chain of tread portions; and at least one high-pressure nozzle arranged to direct at least one a high-pressure jet towards the back side of the part of the chain of tread portions contacting the curved surface, to separate the rubber components from the metal components.

Preferably, the apparatus further includes a conveyor for transporting the metal components, after separation of the rubber components, away from the curved surface of the drive wheel. The conveyor may include means adapted to engage with the metal components. The conveyor ensures that the metal components of the tread portions are continuously captured and removed away from the curved surface.

Preferred embodiments of the invention will now be described, by way of example only, with reference to the accompanying drawings.

### Brief Description of the Drawings

Figure 1 is a view of a conventional apparatus for separating the rubber components of a vehicle tyre from the metal components.
Figure 2a is a side view of a typical road vehicle tyre.
Figure 2b is view of a tread portion after separation from the tyre sidewalls.
Figure 2c is a cross-sectional view through the tread portion.
Figure 3 is a view of a plurality of tread portions connected together in the longitudinal direction to form a chain of tread portions.
Figure 4 is a side elevation of a tread portion separation apparatus according to an embodiment.
Figure 5 is a cross-sectional view of the drive wheel, the curved surface and part of the chain of tread portions in contact with the curved surface according to an embodiment.
Figure 6 is a flow diagram showing a method of separating the rubber components and metal components of tread portions.

### Detailed Description of the Preferred Embodiments

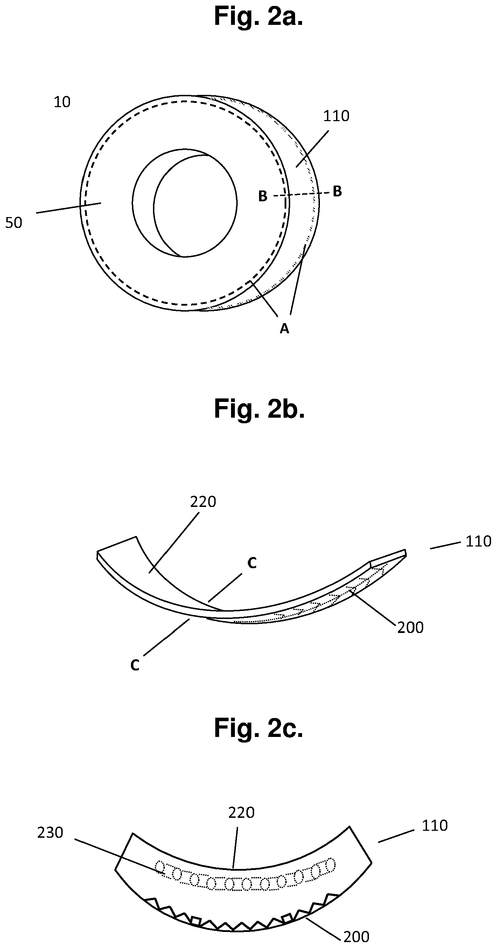

Figure 2a shows a typical road vehicle tyre 10, such as a car tyre or light commercial vehicle tyre. The tyre 10 includes a tread portion 110 and two sidewall portions 50. The tread portion 110 may be separated from the sidewalls 50 by cutting. With reference to figure 2a, a pair of cuts may be made along the dotted lines A. Once the tread portion 110 has been separated from the sidewalls 50, the tread portion 110 may be cut transversely across the width of the tread portion 110 (indicated by the dotted line B). Any means of cutting and separating the tread portion from the sidewalls may be used, such as a blade/saw, a laser, or one or more high-pressure water jets. Furthermore, the order of the cuts is not critical. For example, the tread portion 110 may first be cut along dotted line B.

Figure 2b shows the separated tread portion 110. The tread portion 110 includes a tread side 200 and a back side 220. Figure 2c shows a cross-section through the tread portion 110 (along line C in figure 2b). Embedded within the tread portion 110 is a metal component 230 and a fibrous material (not shown). The metal component 230 typically comprises a metal mesh. The fibrous material makes up a small proportion (typically less than 8%) of the tread portion 110.

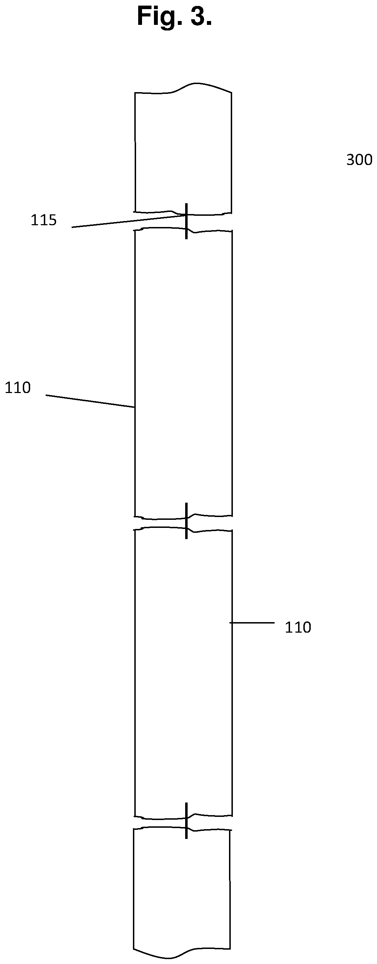

To commence the present separation method, a plurality of tread portions 110 are connected together in the longitudinal direction to form a chain of tread portions 300. Figure 3 shows a plurality of linked tread portions. The plurality of tread portions are connected such that the tread side 200 of each tread portion 110 in the chain 300 faces the same direction. The chain of tread portions may then be considered as having a tread side and a back side. Figure 3 shows the back side of the chain 300. The tread portions 110 may be connected to one another by stapling, stitching, gluing, or any appropriate means sufficient to make a secure attachment. Successive tread portions are preferably joined so that their respective metal components are connected. In preferred arrangements, a single connection is made, with it being particularly preferred that a single clip, staple, or other mechanical connection is used.

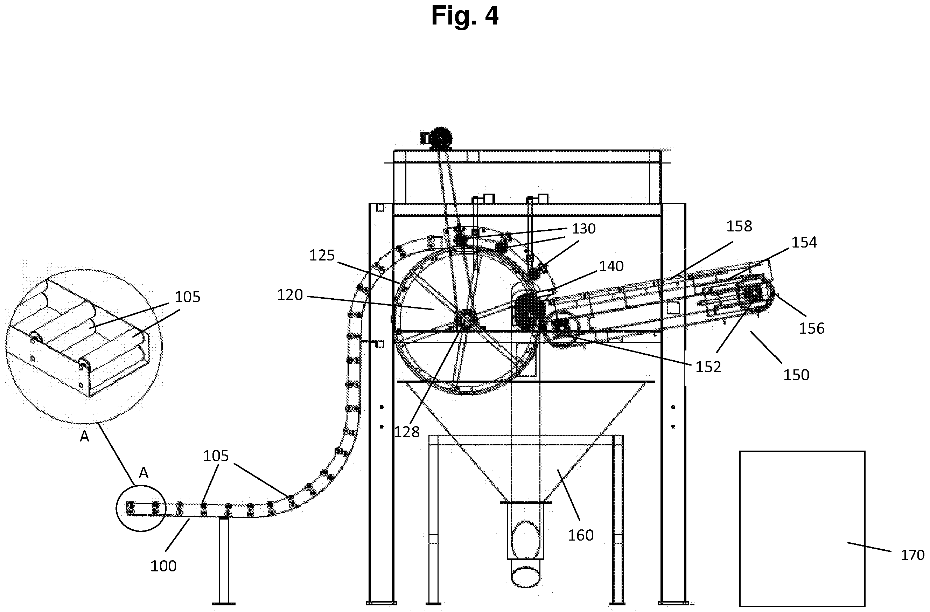

Figure 4 shows a side elevation of a separation apparatus. The apparatus includes a first conveyor 100 and a drive wheel 120. The chain of tread portions 300 is placed on the first conveyor 100 with the tread side 200 facing down (e.g. with the back side facing up). The chain 300 is moved along the first conveyor 100 towards the drive wheel 120. The first conveyor 100 terminates at the drive wheel 120. The chain of tread portions 300 transfers from the first conveyor 100 to the drive wheel 120. Preferably the first conveyor 100 has an "S"-shape or reversed curve. This shape assists in straightening the chain of tread portions 300 as it approaches the drive wheel 120, and ensures the chain 300 more easily moves along the first conveyor.

The first conveyor 100 may comprise any conveyor that is suitable for transferring the chain of tread portions to the drive wheel 120. For example, the first conveyor 100 may be a belt conveyor including two or more pulleys about which a continuous belt rotates (not shown). Alternatively, a chute, or channel, may be used (not shown). However, in a preferred embodiment the first conveyor 100 includes a plurality of rollers 105 placed transversely with respect to the direction of the chain of tread portions 300, and which rotate and provide a low friction means of transporting the chain 300 towards the drive wheel 120. The expanded view A-A shows two sets of a plurality of rollers 105 are provided, such that a plurality of adjacent pairs of rollers 105, spaced apart in a vertical direction, are located along the conveyor 100. The rollers 105 provide a bi-directional guide-way for the chain 300, allowing the chain 300 to travel freely between the two sets of rollers 105. A distance (not shown) between each adjacent pair of rollers 105 is pre-set so as not to bind on the chain 300 as it passes between the adjacent rollers 105. Although, in the preferred arrangement the distance between each pair of adjacent rollers 105 is pre-set and non-adjustable, a means of adjustment may be provided to cope with different thicknesses of tread portions. The rollers 105 may be formed of a metal, such as steel, or any other suitable material. In the preferred arrangement, the rollers 105 are non-powered, but powered rollers may be provided to propel the chain 300 towards the drive wheel 120.

The drive wheel 120 includes an outer curved surface 125, and rotates about an axle 128. The curved surface 125 of drive wheel 120 is at least as wide as the width of the tread portions 110. The curved surface 125 may be a smooth curved surface or may comprise a high-order regular polygon. It is preferable that the curved surface 125 comprises a material having a high coefficient of friction, and particularly a coefficient of friction similar to that of a road surface. This arrangement takes advantage of the inherent high-friction capabilities of the tread side 200 of the tread portions 110, and ensures that the tread side 200 securely grips, by friction, the curved surface 125.

A plurality of rollers 130 are positioned around the circumference of the drive wheel 120 with respect to the first conveyor 100. The rollers 130 are spaced away from the drive wheel 120 so as to allow the tread portions 110 to pass between them and the curved surface 125. The rollers 130 are arranged to press the tread portions 110 against the curved surface 125. Figure 4 shows three rollers, but any suitable number may be used. The rollers 130 may be formed of metal, such as steel, plastics, or any other suitable material, and preferably run on low friction bearings and/or axles. The rollers 130 may include a means (not shown) for urging the rollers 130 against the back side 220 of the tread portions 110. The urging means may comprise a helical or coil spring, a torsion spring, or any suitable elastic material, or an adjustable means, such as a linear actuator (mechanical, hydraulic, pneumatic or electric).

The chain of tread portions 300 is drawn around the drive wheel 120 due to the rotation thereof. The rollers 130 ensure that the tread side 200 of the tread portions 110 are held in contact with the curved surface 125. As the drive wheel 120 rotates, the friction between the curved surface 125 and the tread side 200 causes the tread portions to be pulled around the curved surface 125. The position of the first conveyor 100 with respect to the drive wheel 120 causes the weight of the later tread portions in the chain 300 to urge earlier sections against the curved surface 125 of the drive wheel 120. This action ensures that as large a section of the chain 300 as possible is pressed against the curved surface 125. As each of the tread portions 110 is pulled around the part of the curved surface 125, the remaining tread portions 110 in the chain are drawn along the first conveyor means 100 towards the drive wheel 120, so that tread portions 110 are continuously drawn from the first conveyor 100 around the curved surface 125.

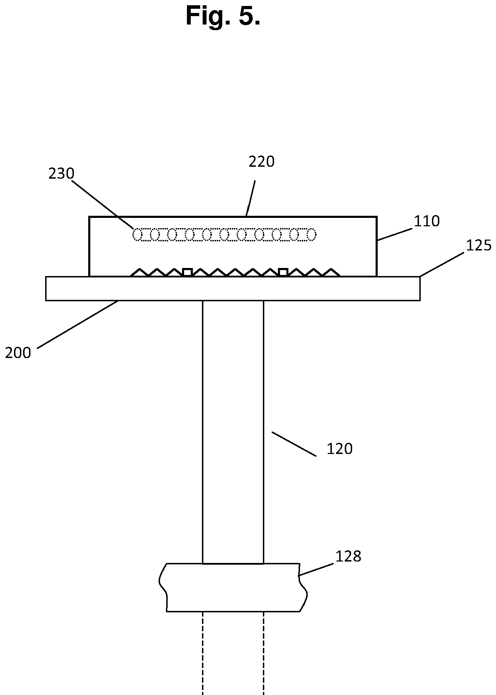

Tread portions are manufactured in a ring shape. A tread portion 110, even after separation from the sidewalls 50 and severed transversely across the width direction, retains a curvature in the longitudinal direction due to its inherent mechanical properties. The cross-section of the tread portion 110 (shown in figure 2c) also tends to curve in the transverse direction. These curvatures are due to the elastic properties of the combined rubber and metal components and remain when the plurality of tread portions 110 are connected to form the chain 300. The inherent elasticity of the tread portions 110 means that they are under tension, as they seek to revert back to their original shape. Pulling the chain 300 over the curved surface 125 forces each tread portion 110 to be inverted against its original shape. The inverting of the tread portions means that the resultant inverted tread portion 110 relaxes into an energy neutral state. The bending in the longitudinal direction also forces the natural curvature in the transverse direction (see figure 2c) to straighten. This has the effect of flattening the chain 300 against the curved surface 125 of the drive wheel 120. This is shown in figure 5.

A nozzle head 140 is positioned further around the circumference of the drive wheel 120, with respect to the first conveyor 100. The nozzle head 140 directs at least one high-pressure jet against the back side 220 of the chain of tread portions 110. Preferably, at least one ultra high pressure water jet is used, but the arrangement is not limited to the use of water, any suitable fluid may be used. An example is shown in figure 4, whereby the nozzle head 140 is positioned clockwise from the end of the first conveyor 100. Thus, the chain of tread portions 300 is drawn around the drive wheel 120 prior to being presented to the nozzle head 140. Preferably, the nozzle head 140 comprises a plurality of ultra high-pressure nozzles, and particularly ultra high-pressure water nozzles. Typically, the plurality of ultra high-pressure water jets each rotate at approximately 3000 rpm and operate at a pressure of approximately 2750 bar. Preferably, pure water is used for the ultra high-pressure water jet(s), because, as opposed to using water with abrasives, it reduces wear in the water nozzles and simplifies the filtering of the water and resultant broken rubber components.

The action of the one or more ultra high-pressure water jets against the tread portions 110, breaks-up the rubber component into pieces. These pieces are typically referred to as rubber crumb. The rubber crumb, once broken and separated from the metal component 230, falls under gravity into a first hopper 160, where it may be collected at a convenient time. The action of the one or more ultra high-pressure water jets also breaks the fibrous material, embedded within the rubber component, into pieces. The pieces of fibrous material, once separated from the metal component 230, fall under gravity into the first hopper 160 together with the rubber crumb. The water from the ultra high-pressure water jet will also fall into the first hopper 160, and is easily filtered from the rubber crumb and the fibrous material so that it can be recycled and used again in the ultra high pressure water jets. The rubber crumb and the fibrous material may be separated from each other, for example, by floatation. Preferably, the one or more ultra high-pressure water jets are powered and positioned to produce rubber crumb having average diameters of 150 µm or less.

The present separation apparatus, together with the inherent characteristics of the tread portions, ensure that the chain 300 is held firmly against the curved surface 125 while the ultra high-pressure water jet is directed at the back side. Accordingly, the rubber components may be broken-up into rubber crumb and separated from the metal components in an efficient and controllable manner. To achieve consistent and efficient processing, it is important for the entire surface of a tread side 200 of the tread portion 110 to be in contact with the curved surface 125. This ensures that the energy of the water jets is used for the break-up of the rubber component into rubber crumb. If the tread is not in contact with the curved surface it will be liable to move and/or vibrate, and part of the energy of the water jet(s) hence dissipate. This not only leads to inefficiency, but it also reduces the consistency of the size of the rubber crumb. Because in the present apparatus the tread portions 110 are inverted against their natural curvature as they are pulled around the drive wheel 120, it is ensured that substantially the entire surface of the tread side 200 is fully in contact with the curved surface 125 of the drive wheel 120. When the entire surface area of the tread side 200 is in contact with the curved surface, little energy is lost from the ultra high-pressure water jets, and the break-up and separation of the rubber components is carried out efficiently.

Therefore the advantage of placing the plurality of tread portions 110 tread side 200 down is twofold. Firstly, the natural high-friction properties of the tread side 200 is used to grip the high-friction surface of the curved surface 125 of the drive wheel 120, in order that the chain of tread portions 110 may be continuously pulled around part of the curved surface 125 towards the water nozzle head 140. Secondly, the tread portions 110 are bent against their natural state around the curved surface 125 such that it can be ensured that substantially the entire surface of the tread side 200 is in contact with the curved surface 125 when being subjected to the one or more ultra high-pressure water jets.

A second conveyor 150 is located after (e.g. in a clockwise direction around the drive wheel 120 in the arrangement shown in figure 4) the nozzle head 140. Once the rubber has been removed, the metal components 230 remain intact. The second conveyor 150 is used to transport the metal components 230 of the tread portions 110 away from the drive wheel 120.
As the metal components 230 are sequentially connected, they may be removed in a single chain. A second hopper 170 may be provided to receive the metal components. The second conveyor 150 may comprise any suitable means for transferring the metal components 230 away from the drive wheel 120, but preferably comprises two pulleys 152 about which a continuous belt rotates 156. The belt 154 includes protrusions 156 operable to engage the metal components 230 to assist transporting them away from the curved surface 125. In the example shown, the metal components 230 are carried away from the drive wheel 120, along the direction of rotation of the belt 154 towards the second hopper 170. At the end of the second conveyor 150, the metal components 230 fall into the second hopper 170 under gravity.

A restrictor 158 may be located above the belt 154. The restrictor 158 is spaced apart from the belt 154 a distance to ensure that the metal components 230 remain engaged with the protrusions 156 and the belt 154.

The use of the above described apparatus in conjunction with a chain of inter-linked tread portions permits efficient harvesting of the rubber and metal materials from vehicle tyre treads. This leads to further advantages in recycling these materials. Preferably, the vehicle tyres are car tyres or light commercial vehicle tyres, such that the chain is formed of inter-linked tread portions of car tyres or light commercial vehicle tyres.

The tread portions 110 are connected in series such that there is a degree of freedom of movement in the lateral and vertical directions between adjacent portions in the chain 300. Preferred embodiments to achieve this aim include using a single clip or staple to connect consecutive tread portions. A metal staple 115 is envisaged as the preferred connection means, as it may be readily pressed though the tread portion. Allowing a freedom of movement between the tread portions aids the chain to pass through the separation apparatus. It is also more effective to join the pieces in the event that the tread portions are not cut square.

The staple 115 is used to connect the metal components of successive tread portions within the chain 300. This ensures that the metal components remain connected after the rubber component has been removed. The task of re-gathering the metal components thus becomes more straightforward. Once the rubber component and the fibrous material has been removed, the use of a single staple 115 allows for a degree of flexibility in the join between the metal components 230 as they move through the remaining part of the apparatus. Since the metal components 230 remain joined together after the rubber component has been removed, as one is pulled away from the drive wheel 120 by the second conveyor 150, the remaining metal components 230 are pulled towards, and engage with, the second conveyor 150. Therefore, the metal components 230 can be continuously captured and moved away from the drive wheel 120.

Preferably, the nozzle head 140 is arranged to direct the one or more high-pressure jets against the back side 220 of the tread portions 110 in an approximately horizontal direction. Accordingly, the rubber crumb will fall in a direction away from the drive wheel 120. This is advantageous, since if the rubber crumb is allowed to come into contact with the drive wheel 120 it may interfere with the operation of the apparatus.

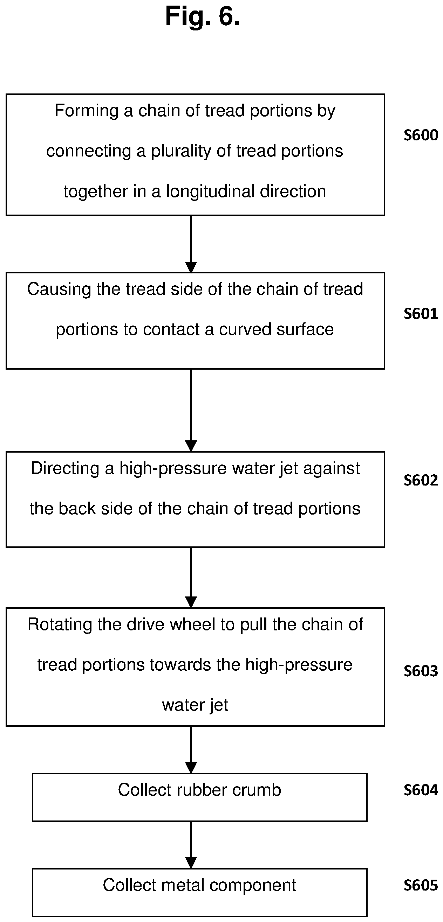

Figure 6 summarises the method used for separating the rubber components and metal components of tread portions of vehicle tyres. In step S600 a chain of tread portions 300 is formed by connecting a plurality of tread portions 110 in a longitudinal direction. In step S601 the tread side of at least a part of the chain of tread portions is caused to contact a curved surface 125. In step S602 a high-pressure jet, typically an ultra high pressure water jet, is directed against the back side 220 of the chain of tread portions to separate the rubber components from the metal components. The curved surface is a curved surface of a drive wheel, and in step S603 the drive wheel 120 is rotated so as to pull the chain of tread portions around the curved surface 125 towards the at least one high-pressure jet. In step S604 the separated and broken rubber components and fibrous material fall away under gravity into a first collection hopper 160. In step S605 the metal components 230 of the tread portions 110, after the rubber components have been separated, are removed from the curved surface 125 of the drive wheel 120.

The present invention has been described in terms of preferred embodiments, it will be appreciated that various modifications and alterations might be made by those skilled in the art. The invention should therefore be measured in terms of the claims which follow.

## Claims

1. A method for separating rubber components and metal components (230) of tread portions (110) of vehicle tyres (10), each tread portion comprising a tread side (200) and a back side (220), the method comprising the steps:
forming a chain (300) of tread portions;
causing the tread side (200) of at least a part of the chain (300) of tread portions to contact a curved surface (125); and
directing at least one high-pressure jet against the back side of the part of the chain of tread portions contacting the curved surface, to cause separation of the rubber components from the metal components;
the method being **characterised by** the chain of tread portions (300) being formed by connecting a plurality of tread portions in a longitudinal direction, said tread portions being connected such that the tread side of each tread portion faces in the same direction, such that the chain of tread portions comprises a tread side and a back side.

2. A method according to claim 1, wherein the at least one high-pressure jet is at a pressure of approximately 2750 bar.

3. A method according to any preceding claim, further comprising a step of transporting the metal components of the chain of tread portions away from the curved surface after the rubber components have been separated.

4. A method according to any of claims 1 to 2,
wherein the curved surface is a curved surface of a drive wheel, the drive wheel being adapted to rotate and pull the chain of tread portions around the curved surface towards the at least one high-pressure jet.

5. A method according to any preceding claim,
wherein the curved surface has a coefficient of friction similar to that of a road surface.

6. A method according to any of any preceding claim,
further comprising urging means arranged to urge the chain of tread portions towards the curved surface,

7. A method of claim 6, wherein the urging means comprises one or more rollers spaced apart from the drive wheel.

8. A method according to any preceding claim,
wherein the chain of tread portions is formed such that there is a degree of freedom of movement between adjacent tread portions in the chain.

9. A method according to any preceding claim,
wherein the at least one high-pressure jet is directed in a substantially horizontal direction towards the back side of the chain of tread portions.

10. A method according to claim 8, comprising using a single connection to connect respective tread portions.

11. A method according to claim 10, wherein the single connection is a single clip or single staple.

12. A method according to any of claims 1 to 8,
wherein the tread portions are tread portions of car tyres or light commercial vehicle tyres.

## Patentansprüche

1. Verfahren zum Trennen von Gummikomponenten und Metallkomponenten (230) von Profilabschnitten (110) von Fahrzeugreifen (10), wobei die Profilabschnitte jeweils eine Profilseite (200) und eine Rückseite (220) umfassen, wobei das Verfahren folgende Schritte umfasst:
Bilden einer Kette (300) aus Profilabschnitten;
Bewirken, dass die Profilseite (200) von mindestens einem Teil der Kette (300) aus Profilabschnitten mit einer gekrümmten Oberfläche (125) in Kontakt gerät; und
Richten von mindestens einem Hochdruckstrahl auf die Rückseite des Teils der Kette aus Profilabschnitten, der sich mit der gekrümmten Oberfläche in Kontakt befindet, um die Trennung der Gummikomponenten von den Metallkomponenten zu bewirken;
wobei das Verfahren **dadurch gekennzeichnet ist, dass** die Kette aus Profilabschnitten (300) gebildet wird, indem eine Vielzahl von Profilabschnitten in einer Längsrichtung verbunden werden, wobei die Profilabschnitte derart verbunden werden, dass die Profilseite jedes Profilabschnitts in dieselbe Richtung weist, sodass die Kette aus Profilabschnitten eine Profilseite und eine Rückseite umfasst.

2. Verfahren nach Anspruch 1, wobei der mindestens eine Hochdruckstrahl einen Druck von ungefähr 2750 bar aufweist.

3. Verfahren nach einem der vorangehenden Ansprüche, weiter umfassend einen Schritt des Transportierens der Metallkomponenten der Kette aus Profilabschnitten von der gekrümmten Oberfläche weg, nachdem die Gummikomponenten getrennt wurden.

4. Verfahren nach einem der Ansprüche 1 bis 2,
wobei es sich bei der gekrümmten Oberfläche um eine gekrümmte Oberfläche einer Antriebsrolle handelt, wobei die Antriebsrolle dazu angepasst ist, sich zu drehen und die Kette aus Profilabschnitten um die gekrümmte Oberfläche zu dem mindestens einen Hochdruckstrahl hin zu ziehen.

5. Verfahren nach einem der vorangehenden Ansprüche,
wobei die gekrümmte Oberfläche einen Reibungskoeffizienten ähnlich demjenigen eines Straßenbelags aufweist.

6. Verfahren nach einem der vorangehenden Ansprüche,
weiter umfassend ein Druckmittel, das dazu angeordnet ist, die Kette aus Profilabschnitten zu der gekrümmten Oberfläche hin zu drücken.

7. Verfahren nach Anspruch 6, wobei das Druckmittel eine oder mehrere von der Antriebsrolle beabstandete Walzen umfasst.

8. Verfahren nach einem der vorangehenden Ansprüche,
wobei die Kette aus Profilabschnitten derart gebildet wird, dass ein Maß an Bewegungsfreiheit zwischen benachbarten Profilabschnitten in der Kette vorhanden ist.

9. Verfahren nach einem der vorangehenden Ansprüche,
wobei der mindestens eine Hochdruckstrahl in einer im Wesentlichen horizontalen Richtung zu der Rückseite der Kette aus Profilabschnitten hin gerichtet wird.

10. Verfahren nach Anspruch 8, umfassend das Verwenden einer einzigen Verbindung, um jeweilige Profilabschnitte zu verbinden.

11. Verfahren nach Anspruch 10, wobei es sich bei der einzigen Verbindung um eine einzige Klemme oder einzige Heftklammer handelt.

12. Verfahren nach einem der Ansprüche 1 bis 8,
wobei es sich bei den Profilabschnitten um Profilabschnitte von Pkw-Reifen oder Leichtnutzfahrzeugreifen handelt.

## Revendications

1. Procédé servant à séparer des composants caoutchouteux et des composants métalliques (230) de parties formant bande de roulement (110) de pneus (10) pour véhicule, chaque partie formant bande de roulement comportant un côté bande de roulement (200) et un côté arrière (220), le procédé comportant les étapes consistant à :
former une chaîne (300) de parties formant bande de roulement ;
entraîner le côté bande de roulement (200) d'au moins une partie de la chaîne (300) de parties formant bande de roulement à entrer en contact avec une surface incurvée (125) ; et
diriger au moins un jet haute pression contre le côté arrière de la partie de la chaîne de parties formant bande de roulement en contact avec la surface incurvée, pour entraîner la séparation des composants caoutchouteux et des composants métalliques ;
le procédé étant **caractérisé par** la chaîne (300) de parties formant bande de roulement formée par la liaison d'une pluralité de parties formant bande de roulement dans une direction allant dans le sens longitudinal, lesdites parties formant bande de roulement étant reliées de telle sorte que le côté bande de roulement de chaque partie formant bande de roulement est orienté dans la même direction, de telle sorte que la chaîne de parties formant bande de roulement comporte un côté bande de roulement et un côté arrière.

2. Procédé selon la revendication 1, dans lequel ledit au moins un jet haute pression est à une pression d'approximativement 2750 bar.

3. Procédé selon l'une quelconque des revendications précédentes, comportant par ailleurs une étape consistant à transporter les composants métalliques de la chaîne de parties formant bande de roulement à l'opposé de la surface incurvée une fois que les composants caoutchouteux ont été séparés.

4. Procédé selon l'une quelconque des revendications 1 à 2,
dans lequel la surface incurvée est une surface incurvée d'une roue motrice, la roue motrice étant adaptée pour tourner et tirer sur la chaîne de parties formant bande de roulement autour de la surface incurvée vers ledit au moins un jet haute pression.

5. Procédé selon l'une quelconque des revendications précédentes,
dans lequel la surface incurvée a un coefficient de frottement similaire à celui d'une surface de roulement.

6. Procédé selon l'une quelconque des revendications précédentes,
comportant par ailleurs un moyen de sollicitation agencé pour solliciter la chaîne de parties formant bande de roulement vers la surface incurvée.

7. Procédé selon la revendication 6, dans lequel le moyen de sollicitation comporte un ou plusieurs rouleaux espacés par rapport à la roue motrice.

8. Procédé selon l'une quelconque des revendications précédentes,
dans lequel la chaîne de parties formant bande de roulement est formée de telle sorte qu'il y a un degré de liberté de mouvement entre des parties formant bande de roulement adjacentes dans la chaîne.

9. Procédé selon l'une quelconque des revendications précédentes,
dans lequel ledit au moins un jet haute pression est dirigé dans une direction sensiblement horizontale vers le côté arrière de la chaîne de parties formant bande de roulement.

10. Procédé selon la revendication 8, comportant l'utilisation d'une simple liaison pour relier des parties formant bande de roulement respectives.

11. Procédé selon la revendication 10, dans lequel la simple liaison est une simple attache ou une simple agrafe.

12. Procédé selon l'une quelconque des revendications 1 à 8,
dans lequel les parties formant bande de roulement sont des parties formant bande de roulement de pneus pour voiture ou de pneus pour véhicule commercial léger.
